# EUROPEAN PATENT SPECIFICATION

(11) **EP 3 463 610 B1**
(45) Date of publication and mention of the grant of the patent: **06.03.2024**
(21) Application number: 17728464.3
(22) Date of filing: 24.05.2017
(51) Int. Cl.: B01D 33/073, B01D 33/37, B01D 33/46, B01D 33/64, B01D 33/80

(54) **ROLLER FILTRATION APPARATUS**
WALZENFILTRIERUNGSVORRICHTUNG
APPAREIL DE FILTRATION A ROULEAUX

(30) Priority: 26.05.2016 EP 16171485
(43) Date of publication of application: 10.04.2019
(73) Proprietor: G. Larsson Starch Technology AB, 295 39 Bromölla (SE)
(72) Inventor: STUBBE, Peter, 3460 Birkerød (DK); BØJE HANSEN, Preben, 2880 Bagsvaerd (DK)
(74) Representative: AWA Sweden AB
(86) International application number: PCT/EP2017/062580
(87) International publication number: WO 2017/202934

(56) References cited:
- WO-A1-2006/002638
- WO-A1-2008/131780
- DE-A1- 1 924 471
- US-A1- 2003 146 174

## Description

The present invention relates to the field of filtering, more precisely the present invention concerns a roller based apparatus for the separation of dry matter and liquid from a medium.

### Background of invention

Separation of dry matter from liquid is known in the art. Methods such as precipitation, centrifugation and filtering are commonly used for separation purposes in a vast number of industries. The latter separation method is relevant for the present invention. An efficient method for separating dry matter from liquid was presented in WO 03/055570 and WO 2006/002638 disclosing filtration apparatuses providing an enclosed pressure regulated separation chamber wherein a suspension is accumulated on a filter which is passed through a set of solid impermeable rollers, whereby the pressure exerted by the rollers separates liquid from the suspension. The separation chamber defined by the rollers where divided into two compartments by the filter. This roller based principle was improved in WO 2008/131780 where a filtration apparatus based on one or more pore rollers was disclosed. A pore roller is a roller with a surface comprising pores allowing permeability for fluid, in fluid contact with a channel for guiding liquid to a filtrate outlet. Thus, the pressure exerted by the rollers guides the liquid inside the pore roller through the pores in the surface. The end products are the filtrated liquid and a dry filter cake. Additional improvements of the pore roller based filtration principle were presented in WO 2014/198907.

DE 19 24 471 A describes a filter element for filter presses.

US 2003/0146174 A1 describes a separation apparatus provided with a screw conveyor for feeding the separation apparatus with difficult to pump suspension. The screw conveyor is arranged to feed medium through an inlet formed in an end plate enclosing a separation area of the separation apparatus.

### Summary of invention

Provision of the pore rollers moved the filtration boundary to the surface of the pore roller instead of having the filter dividing the separation chamber into two compartments. This enabled an increased tension and contact force between the rollers resulting in an increased efficiency in the filtration and separation process. One remaining issue with the known filtration apparatuses is however that the dry filter cake may be wetted again if it comes in contact with the extracted liquid. One purpose of the present disclosure is to avoid wetting of the dry matter separated from the medium.

The present disclosure therefore relates to an apparatus for the separation of dry matter and liquid from a medium according to claim 1, comprising a plurality of press rollers, a separation chamber for receiving the medium and defined, in cross section, by the press rollers, and at least one chamber filter located inside and enclosed by the separation chamber. Preferably the at least one chamber filter is located inside the separation chamber such that and the entire filtration surface of said chamber filter(s) is enclosed by the separation chamber. The chamber filter may advantageously be configured to establish a negative pressure inside said chamber filter(s) relative to the separation chamber such that liquid in the medium is filtrated through the filtration surface and sucked into the chamber filter(s) and dry matter in the medium is passing between corresponding press roller. Similarly the apparatus can be configured such that a negative pressure can be established in said chamber filter(s) relative to the separation chamber such that liquid in the medium can be sucked into and filtrated through the chamber filter(s) and dry matter in the medium can pass between corresponding press roller.

The inventors have realized that instead of having the filtration boundary between a press roller and a filter roller, the filtration can be provided inside the separation chamber, which then can be defined by press rollers alone. Filtration inside the separation chamber can then be provided by means of one or more chamber filters. When medium passes between abutting press rollers during rotation of the press rollers the liquid is squeezed back into the separation chamber whereas dry matter passes between the press rollers to exit the separation chamber and can be collected outside, e.g. by means of a scraper mounted to remove dry matter from the outside surface of a press roller. By applying a negative pressure to the chamber filter(s) the liquid in the medium is filtered and sucked out of the separation chamber through the chamber filter(s).

Another way to handle the rewetting of the filter cake is to provide better access to the filtration boundary. A second aspect of the present disclosure therefore relates to an apparatus for the separation of dry matter and liquid from a medium, comprising a plurality of press rollers, at least one filter roller, a filter shell arranged around each filter roller so that the filter shell passes between said filter roller and two press rollers, a separation chamber for receiving the medium and defined, in cross section, by the press rollers and the filter roller(s) and/or the filter shell(s), wherein the apparatus is configured such that liquid in the medium is filtered across the filtration surface of a filter shell when medium is passing between said filter shell and a press roller.

Provision of a filter shell and a filter roller instead of a pore roller makes it possible to separate the filter shell and the corresponding filter roller.

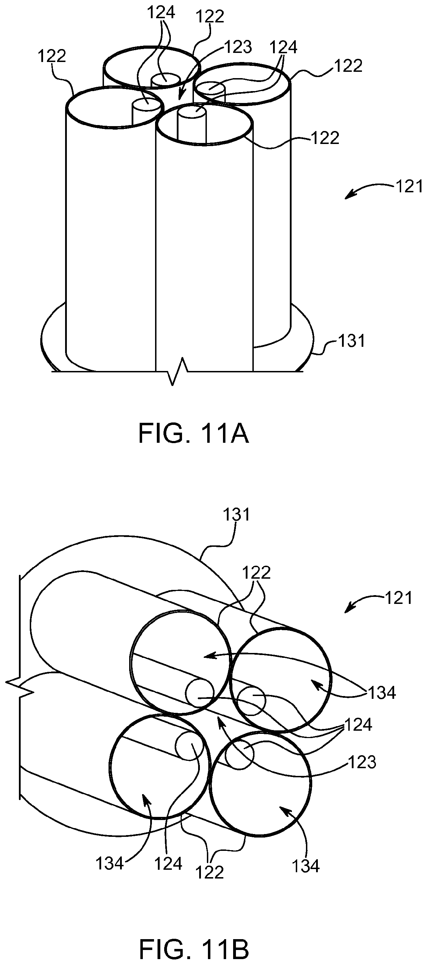

Another embodiment utilizing filter shells and filter rollers relates to an apparatus for the separation of dry matter and liquid from a medium, comprising a plurality of smaller inner rollers, a larger filter shell arranged around each smaller inner roller, a separation chamber for receiving the medium and defined, in cross section, by the filter shell(s). This apparatus is preferably configured such that liquid in the medium is filtered across the filtration surfaces of two filter shells when medium is passing between said filter shells. This solution makes it possible to use only smaller inner rollers and larger filter shells, i.e. avoiding the use of press rollers altogether. This solution is exemplified in fig. 11.

In yet another embodiment the filter roller(s) of the presently disclosed filtering apparatus may be provided with a recess in the side surface. This is one way of separating the filter shell and the filter roller and with the filter shell arranged around the filter roller(s) a cavity is created by this recess "behind" the filter surface of the filter shell. Hence, during rotation of the rollers a filtration boundary is created between the filter shell and the side surface of the adjacent press roller and this boundary is facing the recess in the side surface of the corresponding filter roller. The presently disclosed apparatus may therefore be configured such that liquid in the medium is filtered towards and/or into the recess(es) when medium is passing between a filter shell and a press roller.

The inventors have realized that the wetting issue can be remedied by switching back to solid press rollers and one or more separate filter shells and by creating a cavity "behind" at least one of the rollers, i.e. the filter rollers, e.g. by means of a circumferential recess in the side surface of the filter roller(s).

Another way to separate a filter roller from the corresponding filter shell is by making the diameter of the filter shell larger than the diameter (of the end surfaces) of the filter roller. The ratio in diameters between filter roller and filter shell may be approx. 2 or more. With different diameters of filter shell and filter roller and accessible compartment is formed inside the filter shell and outside the recessed filter roller, i.e. in the cavity formed between the smaller filter roller and the larger filter shell.

The above disclosed aspects may be combined such that one or more chamber filters, as disclosed herein, may be located inside the separation chamber in combination with press rollers, and/or filter rollers (such as pore rollers) and optionally filter shells.

A further aspect of the present disclosure relates to a method for the separation of dry matter and liquid from a medium, comprising the steps of providing the herein disclosed filtering apparatus, feeding medium into the separation chamber when the rollers are rolling, and collecting liquid and dry matter being separated from the medium in the apparatus.

Further details about various technical features and the operation of the present apparatus (at least without the herein disclosed chamber filter, recessed filter roller, filter shell, inner roller and press shell) can be seen in WO 03/055570, WO 2006/002638, WO 2008/131780 and WO 2014/198907.

### Description of Drawings

The present invention will now be described in more detail with reference to the drawings.
- Figs. 1A-B: show top and side view cross sectional illustrations of one embodiment of the presently disclosed filtering apparatus having one filter shell.
- Fig. 2A: shows a perspective principal illustration of one embodiment of the presently disclosed filtering apparatus. This embodiment is configured for two filter shells but only one of these filters is shown.
- Fig. 2B: shows a perspective illustration of an exemplary recessed filter roller.
- Figs. 3A-B: show top and side view perspective illustrations of one embodiment of presently disclosed filtering apparatus.
- Figs. 4A-B: show close-ups of the embodiment illustrated in fig. 3.
- Figs. 5A-B: show top and side view perspective illustrations of one embodiment of the presently disclosed filtering apparatus where one filter roller and filter has been removed.
- Fig. 6: is a top view illustration of the embodiment illustrated in fig. 5.
- Figs. 7A-B: are close up illustrations of the embodiment in fig. 5 to further illustrate the cavity behind the filter shell created by the recess in the filter roller.
- Figs. 8A-B: show two perspective views of one embodiment of the filter shell.
- Figs. 9A-C: are perspective illustrations of the filter roller and the filter shell of the embodiment in fig. 5.

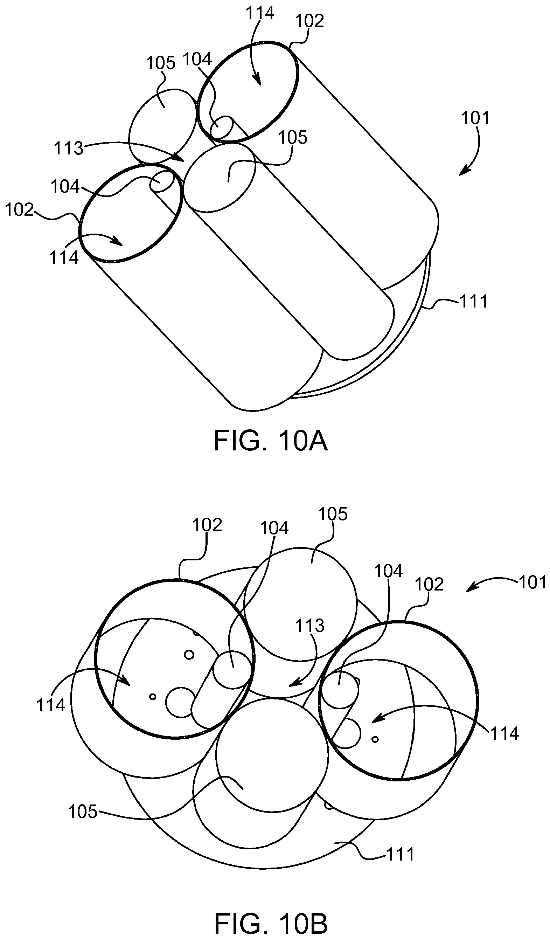

- Figs. 10A-B: show perspective illustrations of an embodiment of the presently disclosed filtering apparatus with two solid press rollers and two small filter rollers enclosed by larger filter shells.
- Figs. 11A-B: show perspective illustrations of an embodiment of the presently disclosed filtering apparatus with four small inner rollers enclosed by corresponding larger filter shells.
- Fig. 12: shows a perspective illustration of one embodiment of the presently disclosed filtering apparatus with two separation chambers created by one large filter shell and a plurality of smaller press rollers and guide rollers.
- Fig. 13: shows a perspective illustration of one embodiment of the presently disclosed filtering apparatus with four small inner press rollers enclosed by corresponding press shells and a chamber filter located inside the separation chamber.
- Fig. 14: shows a cross sectional illustration of one embodiment of the presently disclosed filtering apparatus having a chamber filter located in the lower part of the separation chamber.
- Fig. 15: shows a cross sectional illustration of one embodiment of the presently disclosed filtering apparatus having a screw conveyor for feeding medium into the separation chamber.

### Definitions

For the sake of clarity of the present text the term "separation" is used synonymously with the term "filtering".

By the term "filter cake" is meant an accumulation of dry matter before liquid is removed according to the present invention.

A **press roller** is a roller with a continuous and/or impermeable surface of the roller area facing the separation chamber. A press roller can be a solid roller or can comprise an inner small roller with a corresponding larger outer press shell arranged around the inner roller thereby enclosing the inner roller, the outer press shell thereby facing the separation chamber. The outer press shell can be provided in for example metal, e.g. steel. The continuous and/or impermeable surface of the roller can be provided in for example rubber or polymer or metal, or a mix thereof.

A **filter roller** is a roller with a liquid permeable surface of at least a part of the roller area facing the separation chamber. An example of a filter roller is a pore roller disclosed in for example WO 2008/131780 and WO 2014/198907 where fluid is sucked through pores extending transversely in the roller. As disclosed herein a filter roller can also comprise a filter roller with a recess in the surface and a filter shell enclosing the filter roller, the recess and the filter shell thereby creating a narrow filtration boundary. As also disclosed herein a filter roller can comprise a small inner roller enclosed by a larger filter shell. In case of a filter shell it is the surface of the filter shell that is permeable.

### Detailed description of the invention

The efficiency of the prior art pore roller based filtering apparatus could be optimized by pressure regulating the separation chamber, typically by creating an overpressure in the separation chamber and/or a vacuum in the pore rollers such that the filtered liquid was sucked into the pore rollers. The presently disclosed filtering apparatus may also be configured such that the separation chamber can be pressure regulated, because for the separation process to function properly an overpressure is usually required in the separation chamber. However, an overpressure can typically be generated when a medium containing dry matter and liquid is fed into the separation chamber. And in this case with recessed filter roller(s) the filtering boundary can be made very thin, namely the thickness of the filtration element of the filter shell. In this case it is therefore easier to physically separate the liquid and the dry matter after filtration. Hence, pressure regulation of the separation chamber is not an essential feature of the presently disclosed filtering apparatus.

The rollers may advantageously be rotated by drum motors. A drum motor (sometimes referred to as a motorised pulley) is a geared motor drive enclosed within a tubular shell providing a single component driving pulley. A drum motor typically comprises a motor (e.g. electric or hydraulic) fixed to a stationary shaft at one end of the drum and directly coupled through the motor's rotor pinion to an in-line gearbox which is fixed to the other stationary shaft. The torque is transferred from the motor via the gearbox to the drum shell through a coupling or geared rim attached to the shell or end housing. The only moving external parts are the drum shell and bearing housing. Drum motors are advantageously used in the food or pharmaceutical industry because the drum motor can be designed to withstand hygienic cleaning and service intervals can be very long. A drum motor can therefore advantageously be integrated in one or more of the rollers and the exposed drum shafts become the shafts of the corresponding rollers and the shafts can therefore be attached to sidewalls of the apparatus. These shafts do not rotate during operation of the presently disclosed apparatus.

As illustrated in the examples below the presently disclosed apparatus can be provided with four rollers, e.g. one filter roller and three press rollers or two filter rollers and two press rollers. However, the number of rollers may also be increased, e.g. to six or eight or more rollers. The advantage of increasing the number of rollers is that the axial tension between neighbouring rollers can be increased.

### Chamber filter

As stated previously a first aspect of the present disclosure relates to an apparatus for the separation of dry matter and liquid from a medium, comprising a plurality of rollers, a separation chamber for receiving the medium and defined, in cross section, by the press rollers, and at least one chamber filter located inside and enclosed by the separation chamber. The rollers can be selected from the group of press rollers and filter rollers. Preferably at least one chamber filter is located inside the separation chamber such that and the entire filtration surface of said chamber filter(s) is enclosed by the separation chamber. The chamber filter may advantageously be configured to establish a negative pressure inside said chamber filter(s) relative to the separation chamber such that liquid in the medium is filtrated through the filtration surface and sucked into the chamber filter(s) and dry matter in the medium is passing between corresponding press roller.

In a preferred embodiment the chamber filter(s) is configured to rotate during filtration, such as rotate around an axis parallel with the rotation axes of the press rollers of the apparatus. Thereby it is possible to move the filtration boundary relative to the medium in the separation chamber in order to free the filtration surface. The filtering apparatus may further comprise at least one scraping element mounted to scrape medium collected on the outside / filtration surface of the chamber filter(s). This may further help to free the filtration surface.

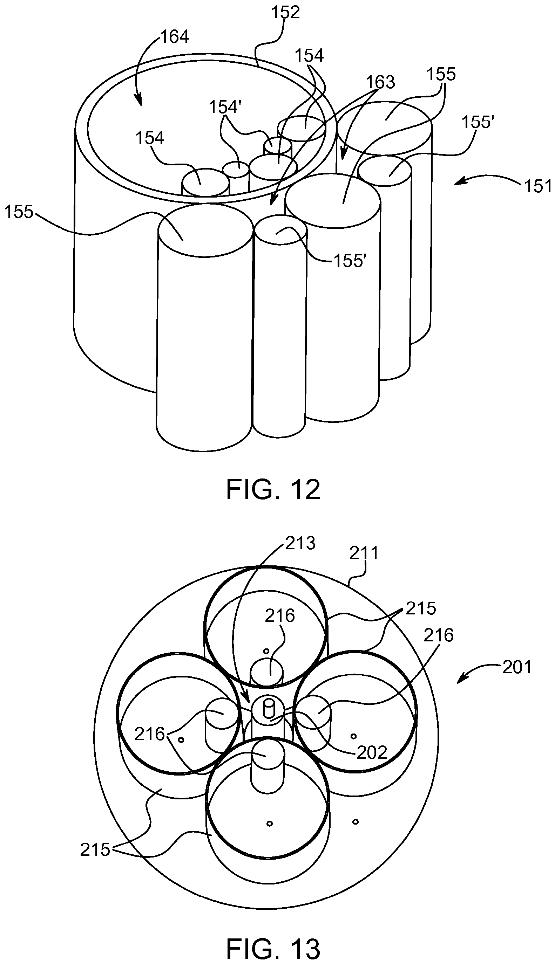

The chamber filter(s) may be shaped to form a body, such as a rounded body, for example cylindrical in shape. The transverse cross section of the chamber filter(s) may be elliptical, such as circular, or polygonal. The longitudinal axis of the chamber filter(s) may be arranged parallel with the longitudinal axes of the press rollers as exemplified in fig. 13. The filtering apparatus 201 in fig. 13 comprises four small inner press rollers 216 enclosed by corresponding press shells 215 and a cylindrical chamber filter 202 located inside the separation chamber 213 defined by the press shells 216 (and the end plates). As also exemplified in fig. 13 a chamber filter is preferably formed such that substantially the entire filtration surface is facing the separation chamber such that liquid during filtration into the chamber filter can cross the filtration border on the filtration surface and enter into the body of the filtration chamber wherefrom the filtrated liquid can be guided out of the apparatus.

An end plate 211 is also illustrated in fig. 13. The opposite end plate closing off the filtering apparatus 201 is not shown. As seen in fig. 13 the diameter of the inner rollers 216 is considerably smaller than the press shells 215 enclosing the inner rollers 216. As also seen in fig. 13 the centre of rotation of the inner rollers 216 are displaced from the centre of rotation of the press shells 215.

One advantage of placing the chamber filter inside the separation chamber is that other types of filters can be used. If the filtration boundary is defined by a filter roller and a neighboring press roller, the filter must be able to withstand the force and pressure of from the press roller whereas a chamber filter is untouched by press rollers.

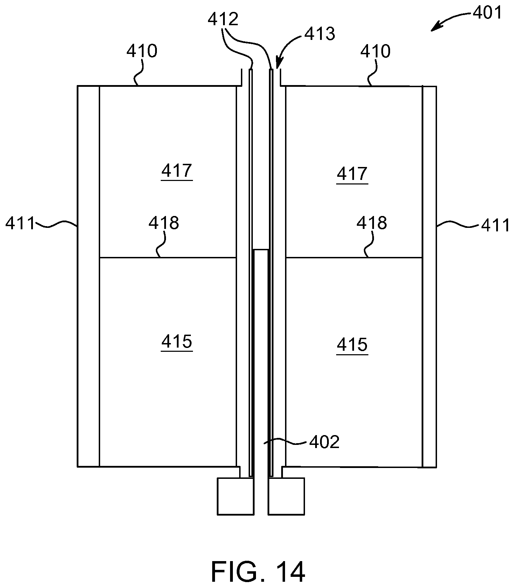

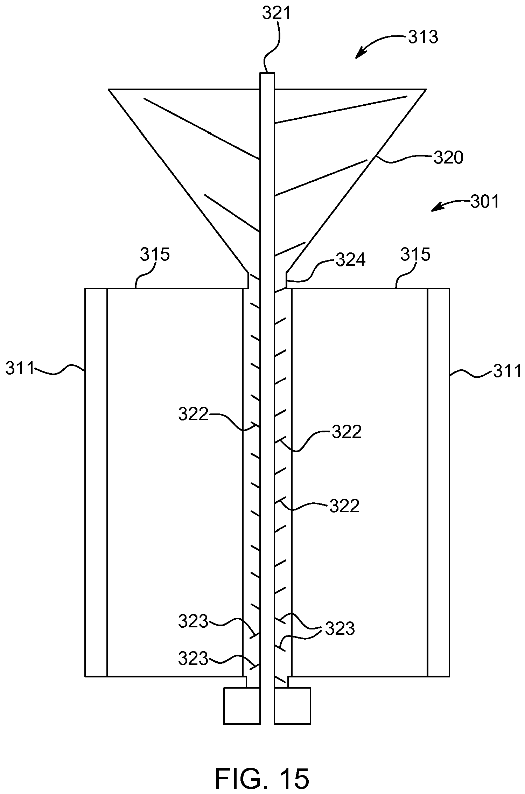

Another embodiment of a chamber filter is illustrated in fig. 14 showing a cross sectional illustration of a filtering apparatus 401 having a chamber filter 402. The chamber 402 may be configured with suction and with rotation around the longitudinal axis. Rollers 410 are provided. The rollers 410 have a lower part 415 and an upper part 417 separated by line 418. The lower part 415 has a solid impermeable surface functioning only as press roller. As seen in fig. 15 the extension of the lower solid part 415 substantially corresponds to the longitudinal extension of the chamber filter 402. The upper part 417 of at least a part of the rollers 410 is provided with a filtration surface such that this part of (at least a part of) the rollers function as filter rollers. The advantage of combining a chamber filter 402 with filter rollers 417 is that the chamber filter 402 and the filter rollers 417 can be provided with different filtration properties, e.g. in terms of pore size. The chamber filter 402 may be provided with a smaller pore size than the filtration surface 417 such that some liquid is removed (sucked) through the chamber filter 402 and the remaining medium is filtered by means of the upper filtration part 417. Medium can be fed into the separation chamber 413 from the top or from the bottom in fig. 14. A scraping element 412 is provided near the chamber filter 402 to ensure that the surface of the chamber filter 402 is kept substantially free from medium, for example by rotation of the chamber filter.

In a further embodiment the chamber filter(s) is based on crossflow filtration. The chamber filter(s) may further be based on ceramic membranes, such as silicon carbide membranes. In a further embodiment the chamber filter(s) is a dead end filter, preferably ceramic, having a porous body and filtration membranes.

### Filter shell and press shell

The inventors have realized that shells can be used as surfaces of the press rollers and/or the filter rollers, i.e. shells instead of solid rollers. The advantage of using shells is that the tolerances in the filtering apparatus can be increased because the shells can be made at least partly flexible and/or elastic, i.e. the surfaces and shape of a shell can be made to adapt to a neighboring surface which can be solid roller or another shell. Hence, the shells may be round, e.g. circular, but during operation and rotation where shells are forced against neighboring rollers or shells the applied forces can deform the shells into non-round shapes, e.g. slightly elliptical shapes, depending on the design of the filtering apparatus and the applied forces.

As also described herein filter shells and press shells might have larger diameters than the diameters of the end surfaces of the corresponding inner rollers. The diameter of the filter roller relative to the diameter of the corresponding filter shell preferably being at least 1.2, more preferably at least 1.5, more preferably at least 2, more preferably at least 2.5, more preferably at least 3. In that case the center of rotation of the shell is typically displaced from the center of rotation of the corresponding inner roller as exemplified in the drawings.

Similarly with the press rollers with an inner solid roller and an outer press shell. The outer press shell may have a larger diameter than the diameter of the inner solid roller, the diameter of the inner solid roller relative to the diameter of the corresponding outer press shell preferably being at least 1.2, more preferably at least 1.5, more preferably at least 2, more preferably at least 2.5, more preferably at least 3. Also here the center of rotation of the inner solid roller is typically displaced from the center of rotation of the corresponding outer press shell.

The presently disclosed apparatus would also work with a filter shell having the same diameter as the diameter of the end surfaces of the corresponding inner filter roller, but in that case it would almost be the same situation as with the pore roller - a pore roller does not comprise a circumferential recess, though.

Another advantage of a larger diameter of a filter shell compared to the corresponding inner filter roller is that an accessible cavity or space is created between the filter shell and the filter roller. This provides for easier access to the filtered liquid separated from the medium and thereby it is possible to avoid that the separated dry matter, i.e. the filter cake, is re-wetted because the filtered liquid can be removed from the apparatus more quickly.

Quick physical separation of liquid and dry matter may be provided by means at least one scraping element mounted to scrape filtrated liquid from the inside of the filter shell. A scraping element like a wiper for windows may be suitable for this purpose, e.g. a substantially soft rubber based scraping element. The scraping element(s) may be spring loaded towards the inside of the filter shell, i.e. to ensure a sufficient tense contact between scraping element the filter surface. Further, the scraping element(s) are preferably mounted such that the scraping interface between a scraping element and the inner surface of the corresponding filter shell is adjacent the contact interface between the outer surface of said filter shell and the neighboring press roller. I.e. the scraping element is advantageously mounted such that filtered liquid is wiped off the inside of the filter surface as quickly as possible after passing through the filtration boundary.

The simplest form of a filter shell is a cylindrical filtration element, preferably a substantially rigid filtration element. Hence, the filter shell may be a thin metallic filter. The thickness of the filter shell may be less than 5 mm, more preferably less than 3 mm, even more preferably less than 2 mm, most preferably less than 1 mm.

To further strengthen a filter shell it may be provided with one or more support rings, e.g. circular rigid, such as metallic, support rings, mounted along the inner surface of the filter shell. To avoid reducing the filtration area of the filter shell the support ring(s) may be liquid permeable, i.e. they may be filters in themselves.

In a further embodiment the filter shell(s) and/or the outer press shell(s) are flexible such that during rotation of the press rollers the filter shell(s) and/or the outer press shell(s) are formed into non-round shape(s). For example by the forced contact with the surface of neighboring press rollers.

### Recessed roller

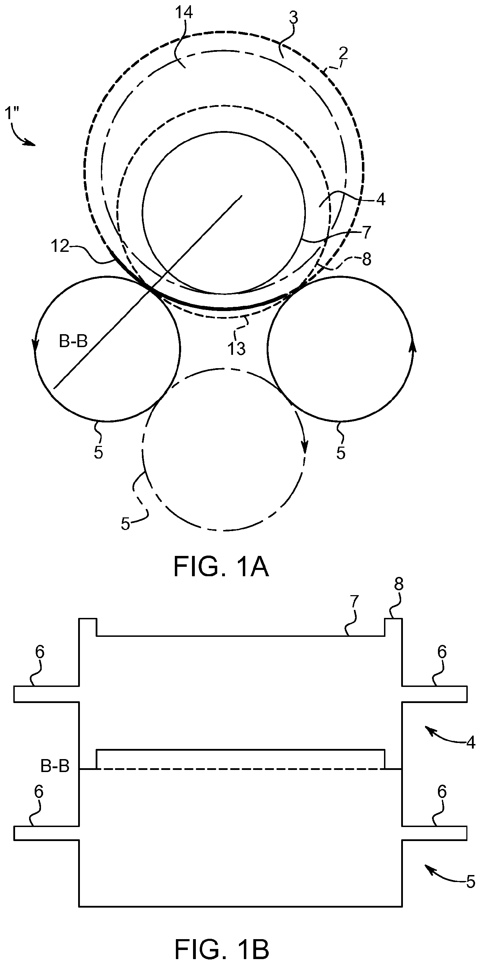

As stated previously the filter roller of the presently disclosed filtering apparatus may be provided with a recess in the side surface as one way of remedying the rewetting issue. Similarly one or more of the press rollers may comprise a circumferential recess, i.e. a recess in the side surface of the press roller. The circumferential recess of the press roller(s) may correspond to the circumferential recess of the filter roller(s). The press rollers and the filter roller(s) may thereby be substantially identical, at least in shape. Recessed rollers are exemplified in fig. 1-9.

In case of one or more recessed rollers the corresponding filter shell is preferably configured to engage and match the circumferential recess of the corresponding filter roller. I.e. the height of the filter shell corresponds to the height of the recess of the corresponding filter roller. This is to ensure a tight and sealed connection between the filter shell and the corresponding recessed filter roller.

The filter shell may comprise collars, such as circular collars, in each end to support the structure of the shell and to provide a liquid tight engagement with the corresponding filter roller and/or the neighboring press roller. The collars may be mounted on each end of the filter shell. The collars are shaped to match the recess of the corresponding recessed filter roller, e.g. the width of the collars corresponds to the depth of the corresponding circumferential recess in the filter roller. Hence, the circular collars may be configured to engage and match the upper and lower edges of the circumferential recess of the corresponding recessed filter roller.

In case of the press rollers also comprising a recess the collars of the filter shell(s) are preferably shaped to match the combined recess of a press roller and a neighboring filter roller. E.g. the width of the collars corresponds to the sum of the depths of the circumferential recesses of a pair of neighboring press and filter rollers.

### Single filter solution

A further aspect relates to an apparatus for the separation of dry matter and liquid from a medium, comprising a plurality of press rollers, a plurality of guide rollers, at least one filter shell arranged around a part of said press rollers and a part of said guide rollers, and one or more separation chambers, such as two or three separation chambers, for receiving the medium and defined, in cross section, by a part of said press rollers, a part of said guide rollers and the filter shell(s). This apparatus is preferably configured such that liquid in the medium is filtered across the filtration surface of a filter shell when medium is passing between said filter shell and a press roller.

This solution is exemplified in fig. 12 showing a filtering apparatus 151. A single large filter shell 152 is arranged around three press rollers 154 and two guide rollers 154'. Outside the filter shell 152 three press rollers 155 are arranged which are engaged with two guide rollers 155'. Thereby two separation chambers 163 are defined between the press rollers 155, the guide rollers 155' and the filter shell 163. The large cavity 164 created inside the filter shell 152 gives good space to handle the filtered liquid. More than one separation chamber can increase the capacity of the filtering apparatus. However, the separation chambers 163 can also function sequentially, i.e. filter cake exiting one separation chamber enters the next separation chamber to extract even more liquid from the filter cake. The order of the separation chambers 163 depends on the direction of rotation of the rollers.

No end plates are shown in fig. 12, and additional press rollers 154, 155 and guide rollers 154', 155' can be arranged around the filter shell 152.

### Roller surface

It is important that the engagement between the various surfaces of the rollers and the filter shells and/or the collars of the filter shell(s) can be tight because they at least partly define the separation chamber that must be kept tight. These surfaces may therefore be provided with a flexible and/or elastic surface characteristic, e.g. a rubber or rubber-like surface characteristic. Hence, the parts of the press rollers engaging with a filter shell (during rotation) may be provided with a first rubber or rubber-like surface. The top and bottom parts of the press rollers and the filter rollers that engage with each other (during rotation) may be provided with a second rubber or rubber-like surface. The parts of the filter roller(s) engaging with collars of a filter shell (during rotation) may be provided with a third rubber or rubber-like surface. And the collars of the filter shells may be provided with a fourth rubber or rubber-like surface. It may be advantageous to have different hardness of the various surfaces. E.g. the collars and the top and bottom parts of the press rollers and the filter rollers may be provided with the "softest" surface, the parts of the press rollers engaging with a filter shell may be provided with a harder surface and the surface of the circumferential recess of a filter roller may be provided with an even harder surface.

The ability to provide all rollers with rubber surface and that all rollers can be substantially identical makes it possible to reduce the cost of this apparatus compared to the pore roller based apparatus, because the rubber surfaces improve the tolerance levels in the apparatus because the flexibility of the rubber (or rubber-like) surfaces provides easier adaption of interfacing and engaging surfaces. It is furthermore possible to separate filtered liquid from the filter cake, e.g. by mechanical means, due to the ability to have a very thin and accessible filtration boundary such that suction in the process can be avoided. This can also help to reduce the cost and complexity of the apparatus.

### Screw conveyor

The inventors have further realized that medium advantageously can be fed to the separation chamber by means of a screw conveyor. This is in particular the case with high viscous medium. The invention therefore relates to an apparatus for the separation of dry matter and liquid from a medium comprising a plurality of rollers, a separation chamber for receiving the medium and defined, in cross section, by the rollers, and at least one screw conveyor for feeding medium into the separation chamber. The rollers can be any combination of press rollers, filter rollers, filter shells and/or press shells as disclosed herein. The filtration may be provided by one or more chamber filters as described herein, by filter rollers and/or by filter shells as disclosed herein.

The feeding of the medium provided by a screw conveyor may create an overpressure inside the separation chamber such that filtering across the filtration surface is provided more efficiently. An overpressure in the separation chamber may make suction in the process avoidable. The screw conveyor may advantageously be configured as a funnel towards the separation chamber as exemplary illustrated in fig. 15. The funneling configuration helps to increase the pressure inside the separation chamber.

The screw conveyor advantageously extends along the entire length of the separation chamber such that medium is delivered all the way from entrance of the separation chamber to the opposite end of the separation chamber thereby feeding medium to all the filtration surface(s). The rate of volume transfer, i.e. the feeding of the medium, can be adjusted by the rotation rate of the screw conveyor.

The screw conveyor typically comprises a rotating helical screw blade. It may for example be a spiral blade coiled around a shaft which is driven at one end and held at the opposite end. It may also be a shaftless spiral, driven at one end and free at the opposite end. The inventors have realized that the helix of the screw blade can be "turned" towards the end of the separation chamber such that near the end of the separation chamber the feeding motion is reversed whereby medium is led back in the opposite direction. This principle is exemplified in fig. 15 where the helical blade 322 of the screw conveyor is pointing downwards along the major part of the screw conveyor, but towards the bottom end the direction of the helical blade 323 is changed such that the feeding of medium is opposite near the bottom end of the separation chamber. Hence, even though the direction of rotation of the helical blade of the screw conveyor is the same all the way through the separation chamber, the feeding motion of the medium is downwards in fig. 15 along the helical blade 322 and upwards along the helical blade 323. The part of the helical blade 323 that provides an opposite direction of feeding motion may constitute between 5-25% of the length of the separation chamber and/or the length of the helical blade 322.

Fig. 15 shows an example of a screw conveyor in one embodiment 301 of the presently disclosed filtration apparatus. The embodiment 301 comprises rollers 315 that can be any combination press rollers, filter rollers, press shells and/or filter shells that suit the purpose. An outer shell 311 is provided to surround the rollers 315. The screw conveyor comprises a funnel shaped upper part 320 and a helical blade 322, 323 coiled around a shaft 321. The top part 320 funnels towards the entrance 324 to the separation chamber of the filtration apparatus 301. The funnel top part 320 defines a large opening 313 for feeding medium into the screw conveyor. Rotation of the shaft 321 rotates the helical blade 322, 323 which drives medium towards the entrance 324 of the separation chamber and further into the separation chamber. The configuration of the helical blade 322 drives the medium downwards in the separation chamber until the configuration of the helical blade 323 which reverses the feeding direction of the medium such that medium does not assemble in the bottom of the separation chamber.

A screw conveyor as disclosed above can be applied to all suitable embodiments described in the present disclosure.

### Examples

Fig. 1A shows a top view cross-sectional illustration one embodiment of the presently disclosed filtering apparatus 1" having one filter shell comprising a cylindrical filtration element 2 and top and bottom circular collars 3. The apparatus 1" comprises four rollers, three of these are press rollers 5 and one is a filter roller 4 having a circumferential recess 7. The press rollers 5 do not have circumferential recesses. The recess 7 is illustrated in fig. 1B where two rollers 4, 5 are illustrated in cross-section. The view in fig. 1B corresponds to a view along the line B-B in fig. 1A. The recess 7 is defined by the two edges 8 in the side surface of the recessed filter roller 4. The separation chamber 13 is formed between the rollers 4, 5 and also the filtration element 2. As seen in fig. 1A the diameter of the filter shell is larger than the diameter of the corresponding roller 4 and the centres of rotation of filter and roller are therefore displaced from each other. Due to this difference in diameter an easily accessible cavity 14 is formed between the filter shell and the roller 4. The directions of rotation of the rollers are indicated by arrows and the rollers can be fixed by means of the shafts 6, e.g. fixed to top and bottom plates.

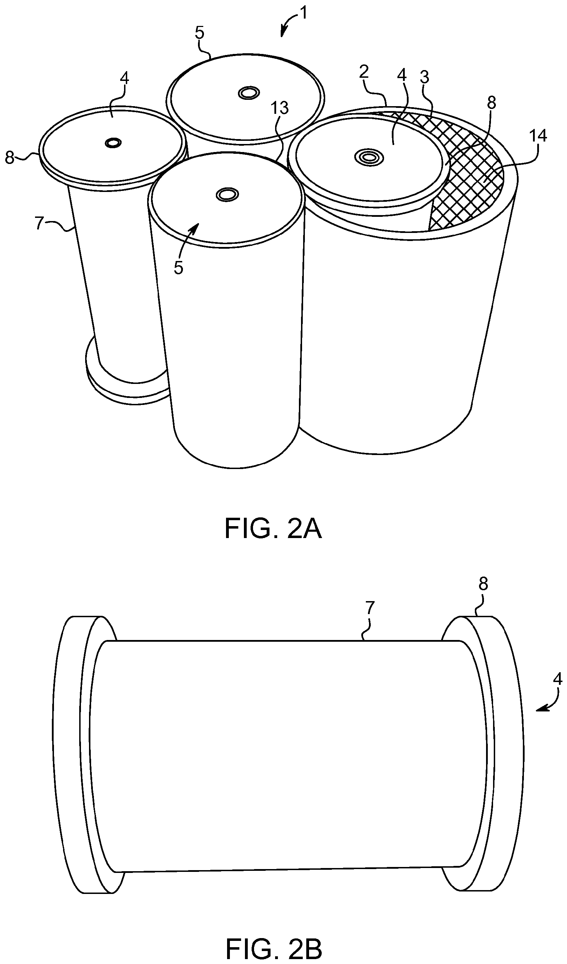

Fig. 2A is a perspective 3D illustration of another embodiment 1 of the presently disclosed filtering apparatus. This embodiment comprises two recessed filter rollers 4 and two press rollers 5. Hence, a filter shell can be placed around each of the recessed filter rollers 4. However, in fig. 2A only one filter shell is illustrated. The cavity 14 formed between the larger filter shell and the smaller recessed filter roller 4 is easily seen.

Fig. 2B is a perspective view of a filter roller 4 "lying down" with the circumferential recess 7 located between the two edges 8.

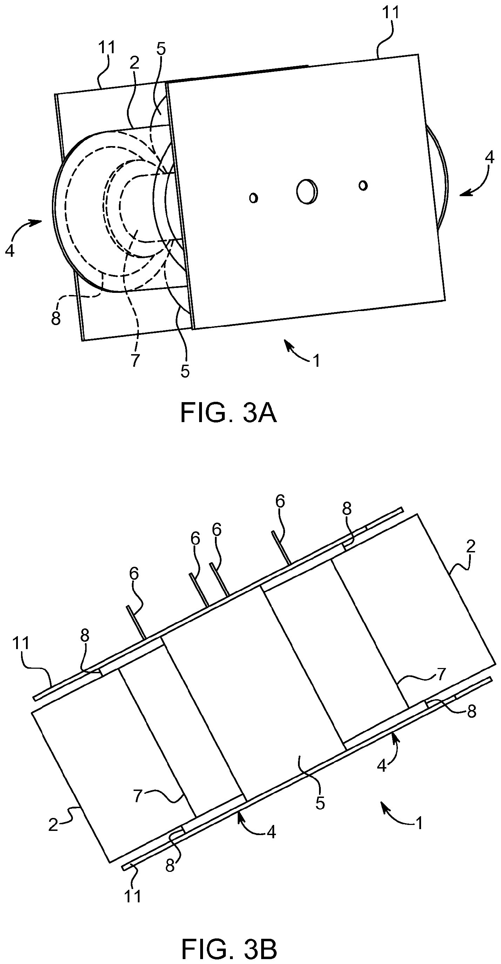

Perspective see through illustrations of one embodiment 1 of the presently disclosed filtering apparatus are seen in figs. 3A and 3B. This embodiment 1 is provided with two filter rollers 4 and two press rollers 5, and end plates 11 for limiting the separation chamber 13 in top and bottom and for providing fixation of the shafts 6 of the rollers. A hole is provided in the end plate 11 for feeding medium in to the separation chamber 13 during the filtering and separation process. In fig. 3B it can be seen that the height of the filtration element 2 matches the height of the recess 7 in the recessed filter roller 4, i.e. the distance between the recess edges 8 matches the height of the filter.

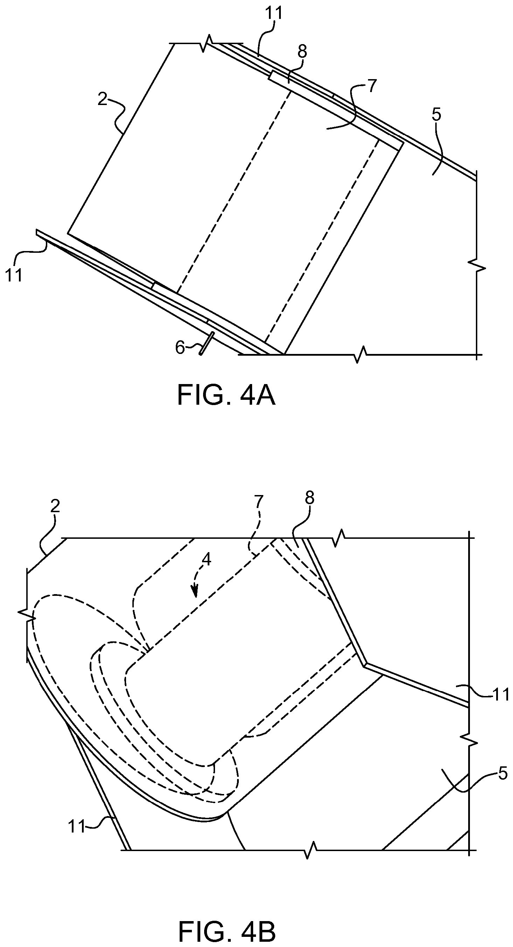

Close up illustrations of the embodiment 1 in fig. 3 are provided in figs. 4A and 4B, which more clearly illustrate the filtering boundary between the filtration element 2 and the press roller 5 and the cavity created between the filtration element 2 and the recessed filter roller 4. The filter collar 3 is not visible in figs. 3 and 4.

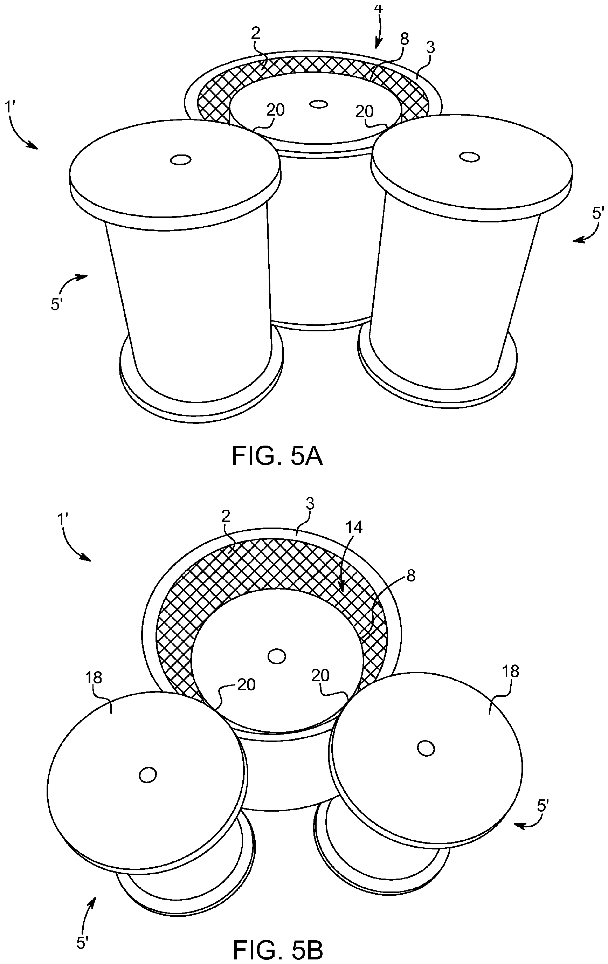

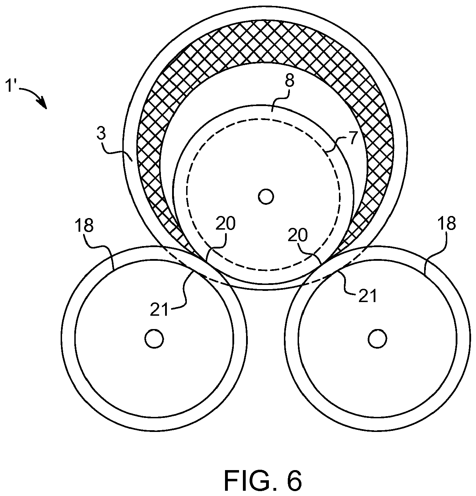

Figs. 5 and 6 show various perspective illustrations from different view angles of a part of a further embodiment 1' of the presently disclosed apparatus. This embodiment 1 ' comprises two recessed filter rollers 4 and two recessed press rollers 5', where the circumferential recess of the press rollers 5' correspond to the circumferential recess 7 of the filter rollers 4. In figs. 5 and 6 only two press rollers 5' and one filter roller 4 is shown, i.e. one filter roller 4 is missing in the figures. However, the missing filter roller 4 makes it possible to get a better look at the separation chamber 13 and the filtering boundary between the filtration element 2 and the press roller 5'.

In figs. 5A and 5B views are provided straight into the separation chamber 13 defined, in cross section, by the rollers 4, 5' and the filter shell. At the top and bottom the separation chamber requires a tight engagement between the edges 8, 18 of neighbouring rollers, in order to provide a liquid tight interface - the interface indicated by reference numeral 20. Correspondingly a tight interface is also required between a filter collar 3 and the corresponding filter roller and abutting press roller.

In fig. 6 the embodiment of fig. 5 is seen from above. The diameters of the rollers 4, 5' at the circumferential recesses are indicated by stippled circles. The outside circumference of the filter below the edges of the press rollers 5 is also indicated by stippled line. The interface 20 between neighbouring rollers 4, 5' falls on a line connecting the centres of the corresponding rollers, whereas the interface 21 between a filtration element 2 and a neighbouring press roller 5', i.e. the filtration boundary, falls outside of this centre connecting line.

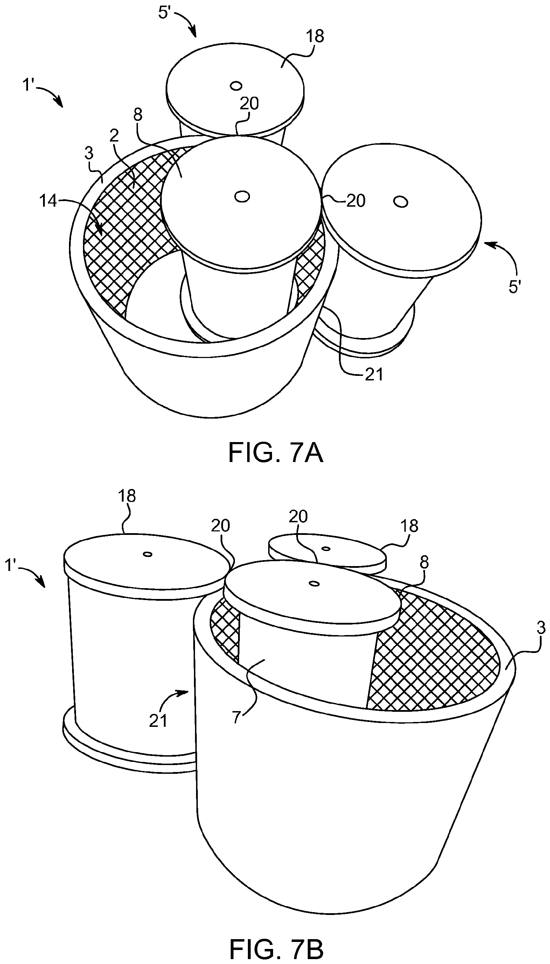

Fig. 7 shows the embodiment 1' of fig. 5 with views from the other side such that the cavity 14 is more clearly visible. The filtering boundary 21 between a filtration element and the neighbouring recessed press roller 5' is indicated in fig. 7. The larger diameter of the filter shell and the circumferential recess of the filter roller 4 provide easy access to the filtered liquid entering the cavity 14 very close to the filtering boundary 21. This access may be utilized for mounting a scraping element (not shown) inside the cavity configured to wipe off filtered liquid from the inside surface of the filtration element 2.

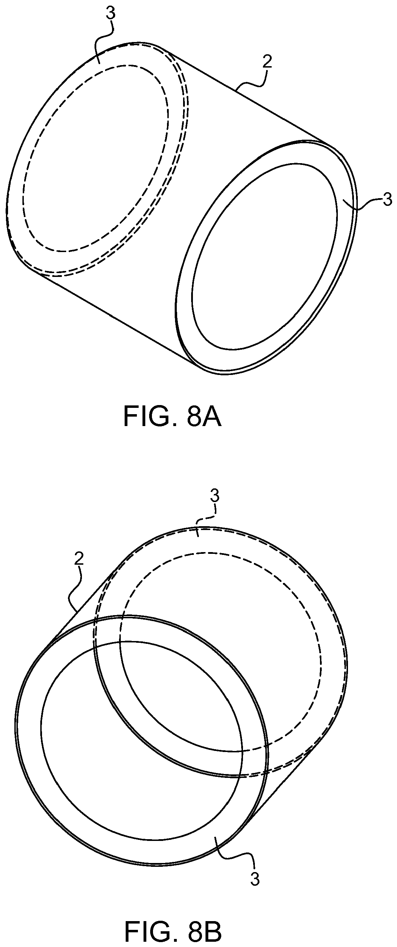

Figs. 8A and 8B show two perspective views of one embodiment of the filter shell with the two collars 3 holding the cylindrical filtration element there between.

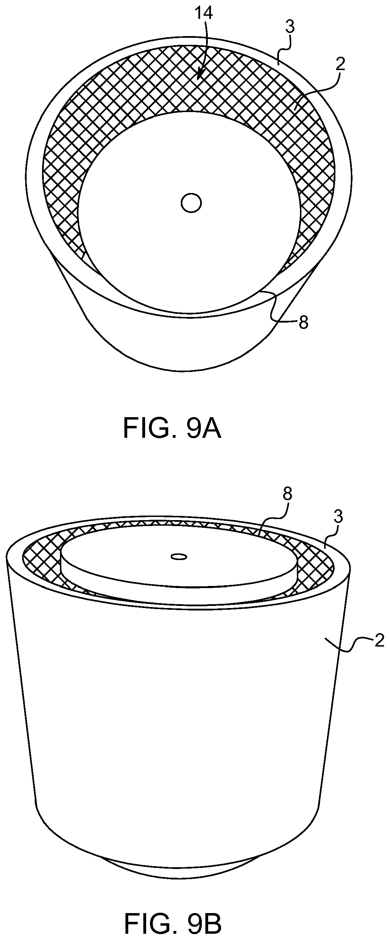

Figs. 9A and 9B show two perspective views of the filter roller 4 and the filter shell from the embodiment of fig. 5. As seen from fig. 9A the width of the collar 3 is larger than the depth of the recess 7 of the filter roller 4, because in this embodiment 1' the press rollers 5' also comprise a circumferential recess. The diameter of the filter shell, the width of the collar 3, the diameter of the rollers 4, 5' and the depth of the recesses of the rollers are therefore mutual dependent on each other.

A further aspect of the present disclosure relates to the use of the presently disclosed apparatus for separation of dry matter from products or elements selected from the group of: beer mask, fruit pulp and fruits such as apples, pears, berries, and grapes, and vegetables such as root vegetables such as potatoes, carrots, etc.

## Claims

1. An apparatus for the separation of dry matter and liquid from a medium, comprising
- a plurality of rollers (315),
- a separation chamber for receiving the medium and defined, in cross section, by the rollers (315), and
- at least one screw conveyor (320, 321, 322, 323) for feeding medium into the separation chamber,
wherein the screw conveyor (320, 321, 322, 323) extends along the entire length of the separation chamber.

2. The apparatus according to claim 1, wherein the rollers are any combination of press rollers (154, 155; 216), filter rollers (410), filter shells (152) and/or press shells (215, 216).

3. The apparatus according to any of the preceding claims, wherein the filtration is provided by one or more chamber filters (202; 402), by filter rollers (410) and/or by filter shells (152).

4. The apparatus according to any of the preceding claims, wherein the screw conveyor comprises a funneling configuration (320) towards the entrance (324) of the separation chamber.

5. The apparatus according to any of the preceding claims, wherein the screw conveyor comprises a spiral blade coiled (322, 323) around a shaft (321) which is driven at one end and held at the opposite end.

6. The apparatus according to any of the preceding claims, wherein the screw conveyor shaftless spiral configured to be driven at one end and free at the opposite end.

## Patentansprüche

1. Einrichtung zur Abscheidung von Trockensubstanz und Flüssigkeit aus einem Medium, die Folgendes umfasst:
- mehrere Walzen (315),
- eine Abscheidekammer zur Aufnahme des Mediums, die im Querschnitt durch die Walzen (315) definiert wird, und
- mindestens einen Schneckenförderer (320, 321, 322, 323) zum Einspeisen von Medium in die Abscheidekammer,
wobei sich der Schneckenförderer (320, 321, 322, 323) entlang der gesamten Länge der Abscheidekammer erstreckt.

2. Einrichtung nach Anspruch 1, wobei die Walzen eine beliebige Kombination aus Presswalzen (154, 155; 216), Filterwalzen (410), Filtermänteln (152) und/oder Pressmänteln (215, 216) sind.

3. Einrichtung nach einem der vorhergehenden Ansprüche, wobei die Filtration durch eine oder mehrere Kammerfilter (202; 402), durch Filterwalzen (410) und/oder durch Filtermäntel (152) bereitgestellt wird.

4. Einrichtung nach einem der vorhergehenden Ansprüche, wobei der Schneckenförderer eine Trichterkonfiguration (320) zum Eingang (324) der Abscheidekammer hin umfasst.

5. Einrichtung nach einem der vorhergehenden Ansprüche, wobei der Schneckenförderer eine um eine Welle (321) herum gewundene Spiralschaufel (322, 323) umfasst, die an einem Ende angetrieben und an dem gegenüberliegenden Ende gehalten wird.

6. Einrichtung nach einem der vorhergehenden Ansprüche, wobei der Schneckenförderer eine wellenlose Spirale ist, die dazu konfiguriert ist, an einem Ende angetrieben zu werden und an dem gegenüberliegenden Ende frei zu sein.

## Revendications

1. Appareil pour la séparation de matière sèche et de liquide à partir d'un milieu, comprenant
- une pluralité de rouleaux (315),
- une chambre de séparation pour recevoir le milieu et définie, en section transversale, par les rouleaux (315), et
- au moins un transporteur à vis (320, 321, 322, 323) pour effectuer l'alimentation en milieu dans la chambre de séparation,
dans lequel le transporteur à vis (320, 321, 322, 323) s'étend le long de la longueur entière de la chambre de séparation.

2. Appareil selon la revendication 1, dans lequel les rouleaux sont une quelconque association de rouleaux de pression (154, 155 ; 216), de rouleaux de filtre (410), d'enveloppes de filtre (152) et/ou d'enveloppes de pression (215, 216).

3. Appareil selon l'une quelconque des revendications précédentes, dans lequel la filtration est fournie par un ou plusieurs filtres de chambre (202 ; 402), par des rouleaux de filtre (410) et/ou par des enveloppes de filtre (152).

4. Appareil selon l'une quelconque des revendications précédentes, dans lequel le transporteur à vis comprend une configuration en entonnoir (320) vers l'entrée (324) de la chambre de séparation.

5. Appareil selon l'une quelconque des revendications précédentes, dans lequel le transporteur à vis comprend une lame en spirale (322, 323) enroulée autour d'un arbre (321) qui est entraîné à une extrémité et retenu à l'extrémité opposée.

6. Appareil selon l'une quelconque des revendications précédentes, dans lequel le transporteur à vis est une spirale sans arbre configurée pour être entraînée à une extrémité et libre à l'extrémité opposée.
